# EUROPÄISCHE PATENTANMELDUNG

(11) **EP 0 950 596 A1**
(43) Veröffentlichungstag der Anmeldung: **20.10.1999**
(21) Anmeldenummer: 99107132.5
(22) Anmeldetag: 13.04.1999
(51) Int. Cl.: B61B 13/00, B65G 1/04, B66C 13/46, G05D 1/02, G01D 5/249

(54) **Fördersystem mit freitragender Codeschiene**

(30) Priorität: 17.04.1998 DE 19817010
(71) Anmelder: R. Stahl Fördertechnik GmbH, 74653 Künzelsau (DE)
(72) Erfinder: Finzel, Manfred, 74653 Künzelsau (DE); Härtweg, Walter, 74542 Braunsbach (DE)
(74) Vertreter: Patentanwälte Rüger, Barthelt & Abel

(57) **Zusammenfassung**

Ein nicht stetig arbeitendes Fördersystem weist parallel zu der Fahrschiene (9) verlaufend eine Codeschiene (4) auf, die dazu dient, zusammen mit einer Leseeinrichtung (3) die Position eines Wagens (1) zu erfassen, der längs der Fahrschiene (9) fährt. Die Codeschiene (4) ist zwischen einzelnen voneinander beabstandeten Befestigungspunkten frei gespannt. Diese Befestigungspunkte können sich an den Enden der Codeschiene (4) oder an Zwischenabschnitten befinden. Zufolge der nicht durchgehenden Unterstützung der Codeschiene (4) ergibt sich eine wesentliche Erleichterung bei der Montage.

## Beschreibung

In der DE-A-38 25 097 ist ein Wegcodiersystem für unstetige Fördersysteme beschrieben. Bei der praktischen Ausführung dieses Systems ist eine Fahrschiene vorgesehen, längs der einzelne Fahrzeuge laufen, die z.B. Regale in einem Regallager bedienen. Parallel zu der Fahrschiene verläuft eine an der Fahrschiene befestigte Codeschiene, die mit einem Pseudorandom-Code versehen ist, dessen einzelne Codeelemente durch mehr oder weniger große öffnungen in der Codeschiene und ungelochte Bereiche gebildet sind. Jeweils n aufeinanderfolgende Codeelemente bilden ein Codewort, das längs der Codeschiene eineindeutig ist. Mit Hilfe einer an dem Wagen befestigten Leseeinrichtung werden diese öffnungen abgetastet und wird die aktuelle Position des Wagens ermittelt.

Die Befestigung der Codeschiene an der Fahrschiene ist verhältnismäßig montageaufwendig und somit kostenintensiv. Bei der bekannten Einrichtung muss die Codeschiene mit relativ geringer Toleranz montiert werden, damit es nicht zu Lesefehlern kommt und auch die optoelektronischen Elemente der Leseeinrichtung nicht durch eine streifende Codeschiene beschädigt werden.

Ausgehend hiervon ist es Aufgabe der Erfindung, ein Fördersystem mit einer vereinfachten Anbringung der Codeschiene zu schaffen.

Diese Aufgabe wird erfindungsgemäß durch das Fördersystem mit den Merkmalen des Anspruches 1 gelöst.

Bei dem neuen Fördersystem wird die bandförmige Codeschiene zwischen zwei voneinander beabstandeten Befestigungsmitteln oder Befestigungspunkten freitragend gespannt. Bei einfachen linearen Systemen liegen diese Befestigungspunkte an den Enden der Codeschiene.

Es ist aber auch möglich, bei längeren Systemen in größeren Abständen die Codeschiene abzuspannen und dazwischen die Codeschiene frei und ohne weitere Halterung verlaufen zu lassen. Der Montageaufwand verringert sich dadurch erheblich, denn die Codeschiene muss nicht mehr fortlaufend über ihre gesamte Länge über eine entsprechende Halterungseinrichtung mit der Fahrschiene verbunden sein.

Aufgrund der neuartigen Anordnung der Codeschiene steht sie nicht mehr notwendigerweise aufrecht, sondern sie wird nach der einen oder der anderen Seite umklappen bzw. Sich querlegen. Dabei ist es insbesondere dann, wenn die Codeschiene in Bodennähe verlegt wird, zweckmäßig, wenn sie an einer, besser an beiden Kanten mit Schutzleisten versehen ist, die dafür sorgen, dass die eigentliche Codeschiene frei von Verunreinigungen bleibt, wenn sich die ansonsten frei gespannte Codeschiene in dem Zwischenbereich auf den Boden legt.

Aus Gewichtsgründen besteht die Schutzleiste vorzugsweise aus Kunststoff.

Insbesondere dann, wenn die Codeschiene zufolge einer sehr großen frei überspannten Länge dazu neigt, die hochkant stehende Lage zu verlassen und umzukippen, ist es zweckmäßig, wenn an der Codeleseeinrichtung eine Führungseinrichtung vorhanden ist, die die Codeschiene aufrichtet und gegebenenfalls auch in die entsprechende Höhenlage bringt, um ein ordnungsgemäßes Lesen der Codeelemente zu gestatten. Hierzu kann die Führungseinrichtung Seitenführungsmittel und Höhenführungsmittel aufweisen. Unabhängig vom sonstigen Verlauf wird die Codeschiene dadurch von der Leseeinrichtung in die entsprechende Lage zur korrekten Ablesung gebracht.

Der aufgrund des Durchhangs entstehende Positionsfehler ist vernachlässigbar klein.

Die Befestigungsmittel sind zweckmäßigerweise mit Spannmitteln versehen, um die Codeschiene in der entsprechenden Spannung zu halten, insbesondere auch dann, wenn die Codeschiene an jener Stelle, an der der Durchhang an sich am größten ist, von der Leseeinrichtung angehoben wird, gespannt zu halten. Durch das Anheben der Codeschiene in diesem Bereich tritt eine scheinbare Verlängerung auf, die bei starrer Verankerung an den Enden zu einer Verschiebung führen könnte.

Diese Spannmittel sind im einfachsten Falle Tellerfedern.

Bei sehr großer Spannweite kann es zweckmäßig sein, in dem Bereich zwischen den Befestigungsmitteln, die die Codeschiene in Längsrichtung fixieren, Stützmittel vorzusehen, auf die sich die Codeschiene lose auflegen kann. Hierdurch wird der Durchhang vermindert und folglich auch die Kraft, die notwendig ist, um die Codeschiene hinreichend gespannt zu halten.

Diese Stützmittel können am Boden aufgeständert oder auch mit der Fahrschiene verbunden sein. In jedem Falle bestehen sie zweckmäßigerweise aus einem Stiel und einer Auflagefläche, deren Breite, gesehen in Richtung guer zur Längserstreckung, größer ist als die Breite der Codeschiene. Von der vorbeilaufenden Leseeinrichtung wird die Codeschiene von der Stützeinrichtung abgehoben und durch die Führungsmittel in die entsprechende Position gebracht. Die Leseeinrichtung kann ohne Kollision über der Stützeinrichtung hinweglaufen.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 das erfindungsgemäße unstetige Fördersystem in einer Stirnansicht, mit einer stark schematisierten Darstellung des Wagens auf der Fahrschiene und der Leseeinrichtung,
Fig. 2 die Leseeinrichtung in einer perspektivischen Darstellung einschließlich einem Stück der Codeschiene,
Fig. 3 die Leseeinrichtung nach Fig. 2, in einer Seitenansicht, teilweise aufgebrochen,
Fig. 4 eines der Befestigungsmittel, das endseitig mit der Codeschiene verbunden ist, in einer Draufsicht,
Fig. 5 eine verkürzte Darstellung des Verlaufs der Codeschiene zwischen zwei endseitigen Befestigungsmitteln, in einer Seitenansicht und
Fig. 6 die Anordnung nach Fig. 5 in einer Draufsicht.

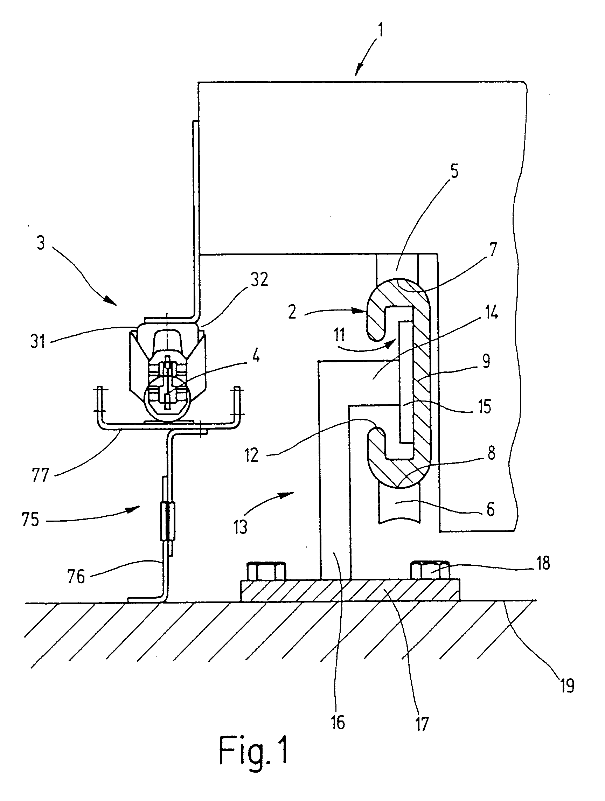

In Fig. 1 ist stark schematisiert ein UnstetigförderSystem in einer Sicht parallel zu der Förderrichtung veranschaulicht. Zu dem Fördersystem gehört wenigstens ein Laufwagen 1, der längs einer Fahrschiene 2 bewegbar ist. An dem Laufwagen 1 ist eine Codeleseeinrichtung 3 befestigt, die einen auf einer Codeschiene 4 aufgebrachten Binärcode liest. Die Codeschiene 4 erstreckt sich parallel zu der Fahrschiene 2.

Der Laufwagen 1 ist nicht maßstäblich und stark schematisiert abgebrochen veranschaulicht. Er enthält wenigstens ein oberes Antriebsrad 5, das in dem Laufwagen 1 drehbar gelagert ist und mittels eines Getriebemotors wahlweise in Umdrehungen zu versetzen ist.

Parallel und im Abstand dazu sind an dem Laufwagen 1 eine oder mehrere Gegendruckrollen 6 frei drehbar gelagert, die ein Kippen verhindern. Sowohl die Antriebsrolle oder Antriebsrollen 5 als auch die Gegendruckrollen 6 sind mit einem konkaven Profil ausgestaltet, das zu der Querschnittsgestalt der Fahrschiene 2 komplementär ist.

Die Fahrschiene 2 ist bei dem gezeigten Ausführungsbeispiel ein im Wesentlichen C-förmiges Profil mit einer oberen, etwa zylinderförmigen Lauffläche 7 und einer unteren, ebenfalls etwa zylinderförmigen Lauffläche 8. Die beiden Laufflächen 7 und 8 sind an einer Seite durch einen geraden Steg 9 miteinander verbunden. Auf der dem Steg 9 gegenüberliegenden Seite enthält die Fahrschiene 2 eine über die gesamte Länge durchgehende T-Nut 11 mit einem Nutenschlitz 12. In entsprechenden Abständen sind mit der Fahrschiene 2 Bodenständer 13 verbunden, die eine L-förmige Gestalt haben, wobei ein oberer horizontal verlaufender Schenkel 14 mittels einer angeschweißten Flanschplatte 15 mit dem Steg 9 verbunden ist. Ein nach unten verlaufender vertikaler Schenkel 16 ist auf einer Stützplatte 17 aufgeschweißt, die mit Hilfe von Schrauben 18 auf einem Gebäudeboden 19 festgeschraubt ist.

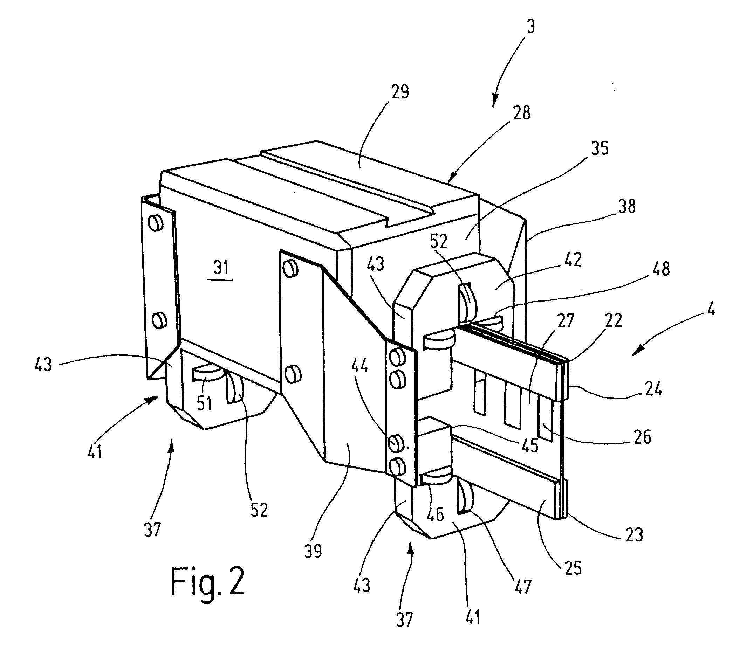

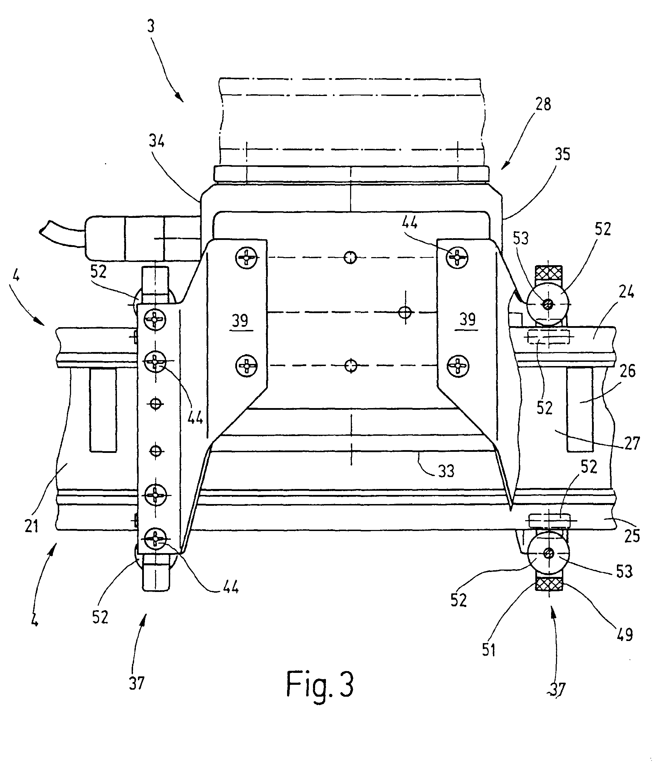

Wie besser aus den Fig. 2 und 3 zu erkennen ist, besteht die Codeschiene 4 aus einem dünnen im wesentlichen undehnbaren Band z. B. einem faserverstärktem Kunststoffband oder einem Stahlband 21, das von zwei zueinander parallelen Bandkanten 22 und 23 begrenzt ist. Auf der Bandkante 22 steckt eine U-förmig profilierte Schutzleiste 24, die aus Kunststoff besteht und das Stahlband 21, ausgehend von der Bandkante 22, ein Stück weit in Richtung auf die gegenüberliegende Bandkante 23 übergreift. Die Schutzleiste 24 sitzt reibschlüssig auf dem Stahlband 21 oder ist gegebenenfalls zusätzlich aufgeklebt.

Eine weitere Schutzleiste 25 übergreift die untere Bandkante 23. Die andere Schutzleiste 25 hat ebenfalls U-förmige Gestalt und übergreift das Stahlband 21 über ein entsprechendes Stück.

Zwischen den beiden Schutzleisten 24 und 25 verbleibt ein band- oder streifenförmiger Bereich, in dem das Stahlband 21 blank liegt. In diesem streifenförmigen Bereich befinden sich Codeelemente 26 in Gestalt von rechteckigen Öffnungen, die, gemessen in Richtung parallel zu dem Abstand zwischen den beiden Bandkanten 22 und 23, alle die gleiche Höhe haben und auf derselben Höhe, bezogen auf eine der beiden Bandkanten 22, 23 liegen. Zwischen den Öffnungen 26 befinden sich ungelochte Abschnitte 27, die ebenfalls Codeelemente darstellen, so dass mit den Codeelementen 26 und 27 ein Binärcode realisiert werden kann.

Jedes Codeelement 26 und 27 hat in Längsrichtung der Codeschiene 4 gesehen eine feste Länge. Mit Hilfe dieser Codeelemente 26 und 27 ist längs der Codeschiene 4 ein Pseudorandom-Code aufgebracht, wobei n aufeinanderfolgende Codeelemente entweder in Gestalt der ungelochten Bereiche 27 oder der Öffnungen 26 jeweils ein Binärwort darstellen, das längs der gesamten Codeschiene 4 eineindeutig ist.

Die Leseeinrichtung 3 weist ein im Wesentlichen quaderförmiges Gehäuse 28 auf, das von einer in Längsrichtung durchgehenden Nut so aufgeteilt ist, dass ein etwa U-förmiger Querschnitt entsteht. Das Gehäuse 28 wird von einer Oberseite 29, zwei zueinander parallelen und im Ab-stand zueinander verlaufenden Seitenflächen 31 und 32, einer Unterseite 33 sowie zwei Stirnseiten 34 und 35 begrenzt.

Der vorerwähnte Schlitz, der lediglich in Fig. 1 andeutungsweise zu erkennen ist, durchsetzt beide Stirnseiten 34 und 35 sowie den Boden 33.

In dem Gehäuse 28 befindet sich die Beleuchtungseinrichtung sowie die optoelektronische Leseeinrichtung zum Erfassen der Codeelemente 26, 27.

Vor der Stirnseite 35 ist, wie Fig. 2 zeigt, eine Führungseinrichtung 37 angeordnet, die über plattenförmige Halter 38 und 39 mit den Seitenwänden 31, 32 verbunden ist. Die Führungseinrichtung 37 hat den Zweck, die Codeschiene 4 höhen- und seitenrichtig bezüglich des in dem Gehäuse 28 enthaltenen Schlitzes und damit höhen- und seitenrichtig bezüglich der darin enthaltenen optoelektronischen Elemente zu führen.

Die Führungseinrichtung 37 weist zwei zueinander spiegelsymmetrische Lagerblöcke 41 und 42 auf. Der Lagerblock 41 ist ein U-förmiges Teil mit zwei zueinander parallelen Seitenflächen 43, die zwischen den seitlichen Haltern 38, 39 stecken und mit diesen über Schrauben 44 verschraubt sind.

Der Lagerblock 41 enthält eine nach oben offene Nut 45 zum Durchtritt der Codeschiene 4 einschließlich der daran befestigten Schutzleiste 25. Von dem Schlitz 45 gehen in der Nähe seines unteren Endes insgesamt drei weitere Schlitze 46, 47 und 48 aus, wobei der dritte Schlitz, der mit dem Schlitz 46 korrespondiert, von der Codeschiene 4 abgedeckt und nur in dem oberen Lagerblock 42 zu erkennen ist. Diese Schlitze 46, 47 und 48 reichen durch den Lagerblock 41 von dessen Vorderseite 49 bis zu dessen Rückseite 41 durch.

Der Schlitz 47 liegt in Verlängerung des Schlitzes 45, während die beiden Schlitze 46 und 48 rechtwinkelig zu dem Schlitz 47 ausgerichtet sind und auf gleicher Höhe liegen.

In jedem der Schlitze 46, 47, 48 ist jeweils ein Rad 52 drehbar gelagert, das mit seinem umfang in den Schlitz 47 hineinragt. Von einem dieser Räder 52 ist in der Schnittzeichnung nach Fig. 3 dessen Achse 53 zu erkennen, die in einer entsprechenden Bohrung in dem Lagerblock 41 steckt. Die Räder 52 in den Schlitzen 46 und 48 sind achsparallel, während die Achse 53 in Verlängerung des Schlitzes 45 ausgerichtet ist.

Aufgrund der Anordnung der Schlitze 46, 47 und 48 gibt es zwei Räder oder Rollen 52, die sich bezüglich der Flachseite der Codeschiene 4 gegenüberstehen und somit die Codeschiene 4 seitlich führen und Seitenführungsmittel bilden, während das Rad 52, das in dem Schlitz 47 und somit in Verlängerung des Schlitzes 45 untergebracht ist, die Codeschiene 4 der Höhe nach bezüglich der Leseeinrichtung 3 führt. Die Räder 52 greifen an der Schutzleiste 25 an.

Der Lagerblock 42 ist genauso ausgestaltet wie der Lagerblock 41, weshalb die dort wiederkehrenden Bauelemente mit denselben Bezugszeichen versehen und nicht erneut beschrieben sind. Der einzige Unterschied zwischen dem Lagerblock 41 und dem Lagerblock 42 besteht darin, dass sich der Schlitz 45 nach unten hin öffnet, so dass die offenen Seiten der Schlitze 45 der beiden Lagerblöcke 41 und 42 aufeinander zu zeigen. Die Rollen 52 des Lagerblocks 42 wirken mit der oberen Schutzleiste 24 zusammen.

Zufolge dieser Anordnung wird die Codeschiene 4 auch im Bereich ihrer oberen Bandkante 22 seitlich und höhenmäßig geführt.

Die Lagen der Achsen 53 sind so gewählt, dass die Codeschiene 4 mit ihren Schutzleisten 24 und 25 mit geringem Spiel und leichtgängig zwischen den Rollen 52 laufen kann.

Gegenüber der Stirnseite 34 ist eine weitere Führungseinrichtung angeordnet, die genauso gestaltet ist wie die soeben beschriebene Führungseinrichtung 37, weshalb auch sie mit dem Bezugszeichen 37 bezeichnet ist. Sämtliche Beschreibungsangaben, die für die Führungseinrichtung 37 vor der Stirnseite 35 gemacht sind, treffen in unveränderter Form auch für die andere Führungseinrichtung 37 zu. Auch sie ist mit Hilfe zweier bandförmiger Halter 38 und 39 mit dem Gehäuse 28 verbunden.

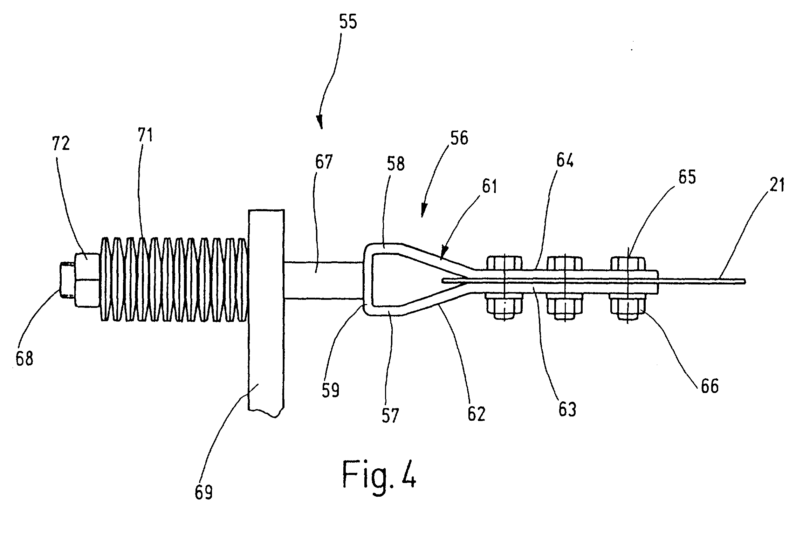

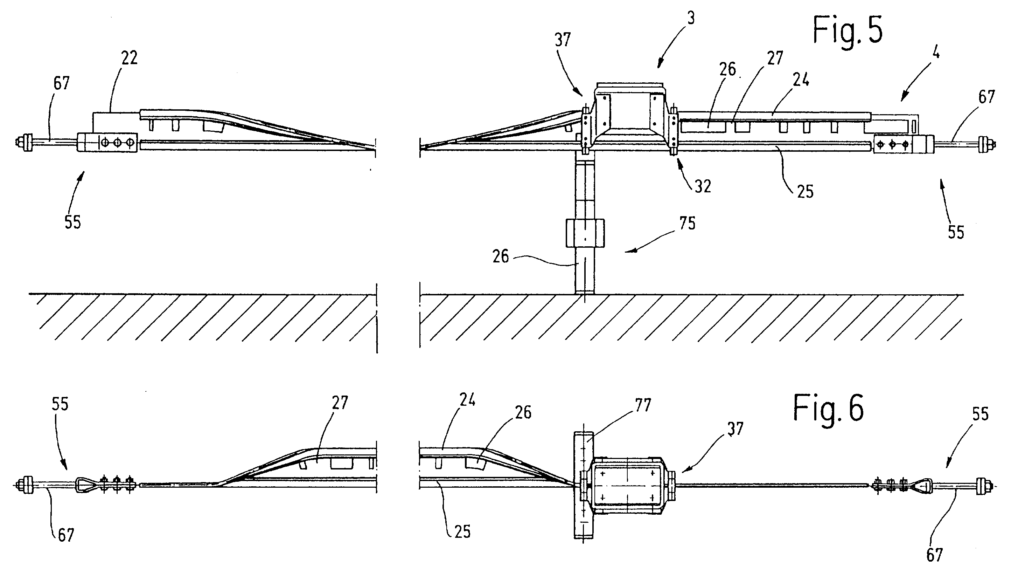

Die Befestigung der Codeschiene 4 erfolgt, wie die Fig. 5 und 6 erkennen lassen, ausschließlich an deren Enden mit Hilfe zweier im Wesentlichen baugleicher Befestigungsmittel 55, die in Fig. 4 vergrößert gezeigt sind.

Zu dem Befestigungsmittel 55 gehört ein U-förmiger Bügel 56 mit zwei aufeinander ausgerichteten Schenkeln 57 und 58, die über ein gerades Rückenteil 59 einstückig miteinander verbunden sind. Bei 61 bzw. 62 sind die beiden Schenkel 57 und 58 aufeinander zu abgekröpft, wodurch zwei Abschnitte 63 und 64 entstehen, die parallel zueinander in einem Abstand verlaufen, der der Dicke des Stahlbandes 21 entspricht. In diesen beiden Abschnitten 63 und 64 sind Durchgangsbohrungen für Befestigungsschrauben 65 vorgesehen, die auch durch entsprechende Bohrungen in dem Stahlband 21 verlaufen, und zwar unterhalb der Codeelemente 27 und 26. Mit Hilfe von aufgeschraubten Muttern 66 werden die Abschnitte 63 und 64 unter Zwischenlage des Stahlbandes 21 zusammengepresst.

In Verlängerung der beiden geraden Abschnitte 63 und 64 ist an der Außenseite des Rückenteils 59 ein zylindrischer Gewindebolzen 67 befestigt, der auf seinem abliegenden Teil mit einem Gewinde 68 versehen ist. Der Bolzen 67 führt im montierten Zustand durch eine Bohrung in einem in dem nicht veranschaulichten Gebäude befestigten Ankerteil 69 hindurch. Das Ankerteil 69 ist im einfachsten Falle ein kräftiger Stahlwinkel oder Vergleichbares, der auf dem Boden 19 festgeschraubt ist. An der dem Bügel 56 abliegenden Seite des Ankersteils 69 sitzen auf dem Bolzen 67 mehrere Tellerfederpaare 71, die mit Hilfe einer auf das Gewinde 68 aufgedrehten Mutter 72 zusammengepresst gehalten werden.

Mit Hilfe dieser beiden Befestigungsmittel 55 ist die Codeschiene 4, wie die Fig. 5 und 6 zeigen, lediglich endseitig befestigt und somit freitragend in jenem Gebäude gespannt, in dem das Fördersystem gemäß Fig. 1 angeordnet ist. Dieses Gebäude ist in den Fig. 5 und 6 ebensowenig gezeigt wie die Fahrschiene 2 sowie der Laufwagen 1. Von dem Laufwagen 1 ist lediglich dessen Leseeinrichtung 3 gezeigt.

Mit Hilfe der Tellerfederpakete 71 wird die Codeschiene 4 gespannt gehalten und kann entsprechend ihrer Eigensteifigkeit in der Mitte frei durchhängen.

Die Montage und Verwendung ist wie folgt:

Nach der Anbringung der Fahrschiene 2 in dem Gebäude werden neben der Fahrschiene 2 die Ankerelemente 69 in der Nähe von den Enden der Fahrschiene 2 im Gebäude angebracht. Sodann wird ein entsprechend langes Stück Codeschiene 4 abgelängt und mit einem Ende zwischen die Abschnitte 63 und 64 des entsprechenden Bügels 56 gesteckt, mit den in den Abschnitten 63 und 64 vorhandenen Bohrungen fluchtend gebohrt und sodann werden die Schrauben 65 eingesteckt und mit Hilfe der Muttern 66 festgeschraubt.

Derselbe Vorgang wiederholt sich am anderen Ende der Codeschiene 4. Die an den Bügeln 56 vorhandenen Gewindebolzen 67 erstrecken sich in Verlängerung der Codeschiene 4, wie dies die Fig. 5 und 6 erkennen lassen. Außerdem verlaufen sie in dem unteren Bereich der Codeschiene 4 dort, wo das Stahlband 21 nicht durch die Codeelemente in Gestalt der Öffnungen 26 geschwächt ist. In diesem unteren Bereich unter den Codeelementen 26, 27 kann das Stahlband 21 ohne Beschädigung auf Zug beansprucht werden. Im Bereich darüber, also auf der Höhe der Codeelemente 26, 27 könnte die auftretende Zugspannung die Öffnungen 26 weiten, womit das Teilungsverhältnis fehlderhaft wird. Infolge der Anbringung der Bügel 56 unterhalb der Öffnungen 26 wird dieser Fehler jedoch vermieden.

An dem entsprechenden Ende wird nunmehr der Gewindebolzen 67 in das Ankerelement 69 eingesteckt und es werden von der Rückseite die Tellerfedern aufgesetzt und mittels der Mutter 72 gesichert. Dieser Vorgang wiederholt sich wiederum auch am anderen Ende der Codeschiene 4, wobei durch entsprechendes Anziehen der Muttern 72 die Codeschiene 4 zwischen den beiden Befestigungsmitteln 55, ähnlich wie ein Seil, freitragend gespannt ist. Der Durchhang, der sich einstellen wird, hängt in bekannter Weise von der Vorspannung ab und wird immer eine endliche von null verschiedene Größe aufweisen.

Abweichend von der schematischen Darstellung in den Fig. 4 und 5 wird die Unterkante bei entsprechender Länge deutlich unterhalb den Befestigungspunkten der Befestigungsmittel 55 verlaufen. Ferner wird sich ohne Beeinflussung von außen die Codeschiene 4 zur Seite neigen, also ihre aufrechte hochkant stehende Lage verlassen. Sie wird dies insbesondere im mittleren Bereich tun, so dass die Codeschiene 4, auf ihre Länge gesehen, eine Viertelumdrehung schraubenförmig in der einen Richtung verdreht ist, um dann, ausgehend von der Mitte, in Richtung auf das andere Befestigungsmittel wieder eine Viertelumdrehung in entgegengesetzter Richtung in Richtung auf die aufgerichtete Stellung zurückgedreht zu sein. Der flach liegende Abschnitt wird dabei je nach Länge der Codeschiene 4 unterschiedlich lang sein.

Da die Leseeinrichtung 3 an beiden Enden mit den Führungseinrichtungen 37 versehen ist, die die Codeschiene 4 sowohl der Höhe als auch der Seite nach führen, wird die Codeschiene 4 während der Fahrbewegung des Wagens 1 und damit der entsprechenden Fahrbewegung der Leseeinrichtung 3 entsprechend aufgerichtet und angehoben werden, damit sie lagerichtig durch das Gehäuse 28 hindurchläuft.

Wenn angenommen wird, dass zu Beginn der Fahrbewegung die Leseeinrichtung 3 im rechten Rand nach Fig. 5 steht und die Codeschiene 4 links von der Leseeinrichtung 3 vom Betrachter weg umgefallen ist sowie nach unten durchhängt, wird sie, wenn die Leseeinrichtung 3 von rechts nach links bewegt wird, von der linken Führungseinrichtung 37 aufgerichtet und im Zusammenwirken mit beiden Führungseinrichtungen 37 entsprechend angehoben werden. Hinter der Leseeinrichtung 3 wird sich, wenn die Leseeinrichtung 3 sich weit genug vom rechten Rand entfernt hat, die Codeschiene 4 wieder umlegen, und zwar aller Wahrsheinlichkeit nach zur derselben Seite, wobei es auch keine Rolle spielt, ob sie sich in der entgegengesetzten Richtung umklappt.

Da die Leseeinrichtung 3 mit dem Laufwagen 1 starr verbunden ist und somit immer in derselben Höhe über dem Boden 19 verläuft, wird das Anheben der Codeschiene 4 am ausgeprägtesten sein, wenn sich die Leseeinrichtung 3 etwa in der Mitte zwischen den beiden Befestigungsmitteln 55 befindet. Die Verringerung des Durchgangs hat eine scheinbare Verlängerung der Codeschiene 4 zur Folge. Da die Codeschiene 4 jedoch an beiden Enden mit Tellerfederpaketen abgespannt ist, wird sie sich selbsttätig zwischen den beiden Verankerungselementen 69 zentireren, so dass der scheinbare Positionsfehler minimiert wird.

Wenn die Abspannlänge zwischen den beiden Befestigungsmitteln 55 eine Strecke erreicht, die bei vertretbarer Vorspannung in den Befestigungsmitteln 55 einen zu großen Durchhang bedingt, kann, wie die Fig. 5 und 6 zeigen, zwischen den Befestigungsmitteln 55 eine oder mehrere Stützen 75 verwendet werden. Diese Stütze 75 ist in der Stirnansicht auch in Fig. 1 zu erkennen. Sie besteht aus einem auf dem Boden 19 befestigten Stiel 76, an dessen oberem Ende eine Auflageeinrichtung oder Auflagefläche 77 befestigt ist. Die Auflagefläche 77 ist im einfachsten Falle ein nach oben offener U-förmiger Bügel mit rechteckigem Querschnittsprofil, wobei sich auf dem Rücken dieses U-förmigen Bügels die Codeschiene 4 auflegen kann. Die Oberseite der Auflageeinrichtung 77 hat einen solchen Abstand von dem Boden 19, dass die Leseeinrichtung 3 frei darüber laufen kann, während sie gleichzeitig die Codeschiene 4 von der Stütze 75 abhebt.

Bei dem gezeigten Ausführungsbeispiel wurde angenommen, dass sich die Codeschiene 4, wie dargestellt, in der Nähe des Bodens befindet und die Befestigungsmittel 55 beispielsweise in der Gebäudewand verankert sind. Es ist aber ohne weiteres möglich, die Befestigungsmittel 55 unmittelbar an der Fahrschiene 2 anzubringen, ebenso wie es denkbar ist, die Stützen 75 nicht mit dem Boden, sondern auch mit der Fahrschiene 2 zu verbinden. Dadurch kann das Fördersystem, das sich beim gezeigten Ausführungsbeispiel am Boden befindet, flurfrei gestaltet werden.

Anstelle der Rollen 52 zur Seiten- und/oder Höhenführung können auch Gleitführungselemente verwendet werden.

Ein nicht stetig arbeitendes Fördersystem weist parallel zu der Fahrschiene verlaufend eine codeschiene auf, die dazu dient, zusammen mit einer Leseeinrichtung die Position eines Wagens zu erfassen, der längs der Laufschiene fährt. Die Codeschiene ist zwischen einzelnen voneinander beabstandeten Befestigungspunkten frei gespannt. Diese Befestigungspunkte können sich an den Enden der Codeschiene oder an Zwischenabschnitten befinden. Zufolge der nicht durchgehenden Unterstützung der Codeschiene ergibt sich eine wesentliche Erleichterung bei der Montage.

## Patentansprüche

1. Fördersystem,
mit wenigstens einer Fahrschiene (2),
mit wenigstens einem längs der Fahrschiene (2) fahrbaren Fördermittel,
mit einer längs der Fahrschiene (2) verlaufend angeordneten, zwei Enden aufweisenden Codeschiene (4) als Maßverkörperung, die in Längsrichtung verteilt angeordnete Codeelmente (26,27) trägt,
mit wenigstens einer längs der Codeschiene (4) bewegbaren Codeleseeinrichtung (3), die starr mit dem wenigstens einen Fördermittel verbunden ist, und
mit wenigstens zwei Befestigungsmitteln (55), die im Abstand voneinander mit der Codeschiene (4) verbunden sind und zwischen denen die Codeschiene (4) frei gespannt ist.

2. Fördersystem nach Anspruch 1, dadurch gekennzeichnet, dass die Codeschiene (4) bandförmig ist.

3. Fördersystem nach Anspruch 1, dadurch gekennzeichnet, dass die Codeschiene (4) ein Metallband (21) aufweist

4. Fördersystem nach Anspruch 1, dadurch gekennzeichnet, dass die Codeschiene (4) auf wenigstens einer ihrer Kanten (22,23) eine Schutzleiste (24,25) trägt.

5. Fördersystem nach Anspruch 1, dadurch gekennzeichnet, dass die Codeschiene (4) auf beiden Kanten (22,23) eine Schutzleiste (24,25) trägt.

6. Fördersystem nach Anspruch 4 oder 5, dadurch gekennzeichnet, dass die Schutzleiste (24,25) die betreffende Kante (22,23) U-förmig umgibt.

7. Fördersystem nach Anspruch 4 oder 5, dadurch gekennzeichnet, dass die Schutzleiste (24,25) aus Kunststoff besteht.

8. Fördersystem nach Anspruch 1, dadurch gekennzeichnet, dass Codeelmente (26,27) von Öffnungen (26) in der Codeschiene (4) gebildet sind.

9. Fördersystem nach Anspruch 8, dadurch gekennzeichnet, dass die Codeelemente (26,27) einen Binärcode repräsentieren.

10. Fördersystem nach Anspruch 9, dadurch gekennzeichnet, dass der Binärcode ein Pseudorandomcode ist.

11. Fördersystem nach Anspruch 1, dadurch gekennzeichnet, dass die Codeleseeinrichtung (3) mit einer Führungseinrichtung (37) für die Codeschiene (4) versehen ist.

12. Fördersystem nach Anspruch 11, dadurch gekennzeichnet, dass die Führungseinrichtung (37) Seitenführungsmittel (52) für die Codeschiene (4) aufweist.

13. Fördersystem nach Anspruch 11, dadurch gekennzeichnet, dass die Führungseinrichtung (37) Höhenführungsmittel (52) für die Codeschiene (4) aufweist.

14. Fördersystem nach Anspruch 1, dadurch gekennzeichnet, dass wenigstens eines der Befestigungsmittel (55) mit einem Ende der Codeschiene (4) verbunden ist.

15. Fördersystem nach Anspruch 1, dadurch gekennzeichnet, dass wenigstens eines der Befestigungsmittel (55) Spannmittel (71) aufweist, um die Codeschiene (4) zwischen sich gespannt zu halten.

16. Fördersystem nach Anspruch 15, dadurch gekennzeichnet, dass die Spannmittel (71) Tellerfedern sind.

17. Fördersystem nach Anspruch 1, dadurch gekennzeichnet, dass die Codeschiene (4) zwischen den Befestigungsmitteln (55) frei gespannt ist.

18. Fördersystem nach Anspruch 1, dadurch gekennzeichnet, dass im Verlauf der Codeschiene (4) wenigstens ein Stützmittel (75) vorgesehen ist, um einen Durchhang des frei gespannten Abschnitts der Codeschiene (4) zu begrenzen.

19. Fördersystem nach Anspruch 18, dadurch gekennzeichnet, dass das Stützmittel (75) eine Auflagefläche (77) aufweist, die in Richtung quer zu der Längserstreckung der Codeschiene (4) breiter ist als es der Breite (Höhe) der Codeschiene (4) entspricht.

20. Fördersystem nach Anspruch 18, dadurch gekennzeichnet, dass das Stützmittel (75) mit einem Stil (76) auf einem Boden befestigt ist.

21. Fördersystem nach Anspruch 18, dadurch gekennzeichnet, dass das Stützmittel (75) an der Fahrschiene (2) befestigt ist.

22. Fördersystem nach Anspruch 18, dadurch gekennzeichnet, dass das Stützmittel vom Gebäudeboden (19) gebildet wird.

23. Fördersystem nach Anspruch 1, dadurch gekennzeichnet, dass die Enden der Codeschiene (4) mit Ende der Fahrschiene (2) korrespondieren.
